# EUROPÄISCHE PATENTANMELDUNG

(11) **EP 2 988 037 A1**
(43) Veröffentlichungstag der Anmeldung: **24.02.2016**
(21) Anmeldenummer: 14181897.1
(22) Anmeldetag: 22.08.2014
(51) Int. Cl.: F16K 1/22, F01D 17/14, F16K 17/168

(54) **Ventil für eine Überströmleitung**

(71) Anmelder: Siemens Aktiengesellschaft, 80333 München (DE)
(72) Erfinder: Rothe, Klaus, 46459 Rees (DE); Zimmer, Gerta, 45468 Mülheim an der Ruhr (DE)

(57) **Zusammenfassung**

Die Erfindung betrifft eine Überströmleitung, in der eine Klappe (3) angeordnet ist, die dampfdicht ausgebildet ist und ein Sicherheitsventil (6) aufweist, das im Störfall aufmacht und den Dampf durch die Klappe (3) zu einer Niederdruckteilturbine (4) führt.

## Beschreibung

Die Erfindung betrifft eine Strömungsmediumleitung mit einer Klappe, die drehbar innerhalb der Strömungsmediumleitung angeordnet ist.

Dampfturbinen werden unter anderem in Dampfkraftwerken eingesetzt. In der Regel umfasst eine Dampfturbine eine Hochdruckteilturbine, durch die ein Frischdampf strömt, der aus einem Dampferzeuger zugeströmt wird. Nach der Durchströmung durch die Hochdruckteilturbine strömt der Dampf durch einen Zwischenüberhitzer, wobei im Zwischenüberhitzer der Dampf auf eine hohe Temperatur erhitzt wird. Nach Durchströmung durch die Mitteldruckteilturbine strömt der Dampf über eine Überströmleitung zu einer bzw. mehreren Niederdruckteilturbinen. Die thermische Energie des Dampfes wird in Rotationsenergie eines Rotors umgewandelt.

Die Überströmleitung, die den Dampf von der Mitteldruckteilturbine zur Niederdruckteilturbine leitet, ist derart ausgebildet, dass darin Klappen, insbesondere Stauklappen angeordnet sind, um den Dampfstrom in der Überströmleitung zu regeln. Die Stauklappen können daher auch als Regelklappen bezeichnet werden. Häufig werden diese Stauklappen mit einer definierten Restöffnung ausgelegt. Das bedeutet, dass bei einer geschlossenen Stauklappe dennoch der Dampf die Möglichkeit hat, durch die Überströmleitung zu strömen.

Die derzeitigen Anforderungen an Dampfkraftwerke erfordern es allerdings, dass die Stauklappen in der Überströmleitung ohne Restspalt ausgeführt werden müssen. Das bedeutet, dass zukünftig bei geschlossener Stauklappe kein Dampf durch die Überströmleitung strömen soll. Das bedeutet, dass die Stauklappen dampfdicht ausgeführt werden.

Allerdings führt dies zu dem Problem, dass in einem Fehlerfall ein unzulässig hoher Druck in der Überströmleitung entstehen könnte. Dies könnte beispielsweise erfolgen, wenn die Klappe bei Volllast fehlerhaft schließt. Daher werden zur Absicherung und aus Sicherheitsgründen Sicherheitsventile vor der Stauklappe in die Überströmleitung angeordnet. Das bedeutet, dass für den Fall, wenn ein unzulässig hoher Druck auftaucht, der Dampf über das Sicherheitsventil ausströmen kann, wobei allerdings Rohrleitungen ausgebildet werden müssen, die an das Sicherheitsventil angeschlossen werden, um den Dampf aus der Dampfkraftwerkhalle herauszuführen.

Aufgabe der Erfindung ist es eine Möglichkeit anzugeben, im Störfall bei dampfdicht geschlossener Stauklappe den überschüssigen Dampf abzuführen.

Gelöst wird diese Aufgabe durch eine Strömungsmediumleitung insbesondere Dampfleitung, insbesondere Überströmleitung, mit einer Klappe, die drehbar innerhalb der Strömungsmediumleitung angeordnet ist, wobei ein Sicherheitsventil, das zum Durchströmen von Strömungsmedium durch die Strömungsmediumleitung bei geschlossener Klappe ausgebildet ist.

Die Erfindung schlägt hier vor, die Klappe dampfdicht auszubilden und derart auszuführen, dass bei geschlossener Klappe eine Möglichkeit besteht, den Dampf durch die Klappe zu führen. Es wird vorgeschlagen, hierbei ein Sicherheitsventil anzuordnen, das in der Klappe angeordnet wird.

Vorteilhafte Weiterbildungen sind in den Unteransprüchen angegeben.

So wird in einer ersten vorteilhaften Weiterbildung eine Bypassleitung angeordnet, die eine strömungstechnische Verbindung herstellt zwischen einen ersten Raum vor der Klappe und einem zweiten Raum hinter der Klappe, wobei das Sicherheitsventil in der Bypassleitung angeordnet ist.

Somit wird vorgeschlagen, eine konstruktiv einfache Lösung auszubilden, um überschüssigen Dampf, der vor der Stauklappe angeordnet ist, im Störfall über die Bypassleitung und dem Sicherheitsventil vorbeiströmen zu lassen. Hierbei sind keine zusätzlichen Rohrleitungen erforderlich, die den Dampf aus der Halle herausführen. In alternativen Ausführungsformen können mehrere Bypassleitungen angeordnet werden, wobei auch mehrere Sicherheitsventile in den Bypassleitungen jeweils angeordnet sind.

In einer weiteren vorteilhaften Weiterbildung ist das Sicherheitsventil in der Klappe angeordnet. Das bedeutet, dass man bei dieser Teillösung auf eine Bypassleitung verzichtet und die dampfdicht ausführbare Stauklappe derart weiterbildet, dass das Sicherheitsventil in der Klappe integriert ist.

Dazu wird in einer vorteilhaften Weiterbildung die Klappe mit einer weiteren Zusatzklappe ausgeführt, die schwenkbar relativ zur Klappe ausgebildet ist, so dass dann bei geschlossener Klappe eine Öffnung über die Zusatzklappe erfolgen kann. Die Erfindung schlägt somit vor, die schwenkbare Klappe mit einer weiteren schwenkbaren Zusatzklappe auszubilden, die derart funktioniert, dass bei einer dampfdicht geschlossenen Stauklappe die Schwenkklappe relativ zur Stauklappe gedreht werden kann, wobei eine Durchströmöffnung entsteht, durch die ein Dampf strömen kann.

In einer weiteren vorteilhaften Weiterbildung ist in der Zusatzklappe das Sicherheitsventil angeordnet. Somit kann in einem Störfall, bei der die Stauklappe und die Zusatzklappe in geschlossener Stellung sind, das Sicherheitsventil schnell öffnen, wenn der Druck unzulässig hoch ist vor der Stauklappe. Der Dampf strömt dann anschließend durch das Sicherheitsventil durch die Strömungsmediumleitung.

In einer weiteren vorteilhaften Weiterbildung ist in der Klappe eine Anpassung, in der ein Sicherheitsventil angeordnet ist bzw. eine Zusatzklappe, die als Sicherheitsventil fungiert. Somit kann in einem Störfall, bei der die Stauklappe in geschlossener Stellung ist, das Sicherheitsventil schnell öffnen, wenn der Druck vor der Stauklappe unzulässig hoch ist.

Vorteilhafterweise ist die Klappe kreisförmig ausgebildet und um eine Drehachse, die mittig durch die Klappe verläuft, drehbar ausgebildet. Dies ist eine konstruktive einfache Lösung und dadurch vergleichsweise kostengünstig. Aus Symmetriegründen verläuft die Drehachse mittig durch die Stauklappe. Dafür müssen entsprechende Antriebe ausgebildet sein, die das Trägheitsmoment einer solchen Stauklappe berücksichtigen.

In einer weiteren vorteilhaften Weiterbildung weist die Klappe eine halbkreisförmige Aussparung auf, wobei in dieser Aussparung die Zusatzklappe bzw. das Sicherheitsventil angeordnet ist. Die Zusatzklappe kann um dieselbe Drehachse schwenkbar ausgebildet sein. Aus Symmetriegründen ist dies eine vorteilhafte Lösung, da eventuell lediglich ein einziger Antrieb benutzt werden kann.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Ausführungsbeispiele der Erfindung werden nachfolgend anhand der Zeichnungen beschrieben. Diese sollen die Ausführungsbeispiele nicht maßgeblich darstellen, vielmehr ist die Zeichnung wohl zur Erläuterung dienlich, in schematisierter und/oder leicht verzerrter Form ausgeführt. Im Hinblick auf Ergänzungen der in der Zeichnung unmittelbar erkennbaren Lehren wird auf den einschlägigen Stand der Technik verwiesen.

Es zeigen
- Figur 1: eine Querschnittsansicht einer ersten Ausführungsform der Erfindung und
- Figur 2: eine Querschnittsansicht einer zweiten Ausführungsform der Erfindung.

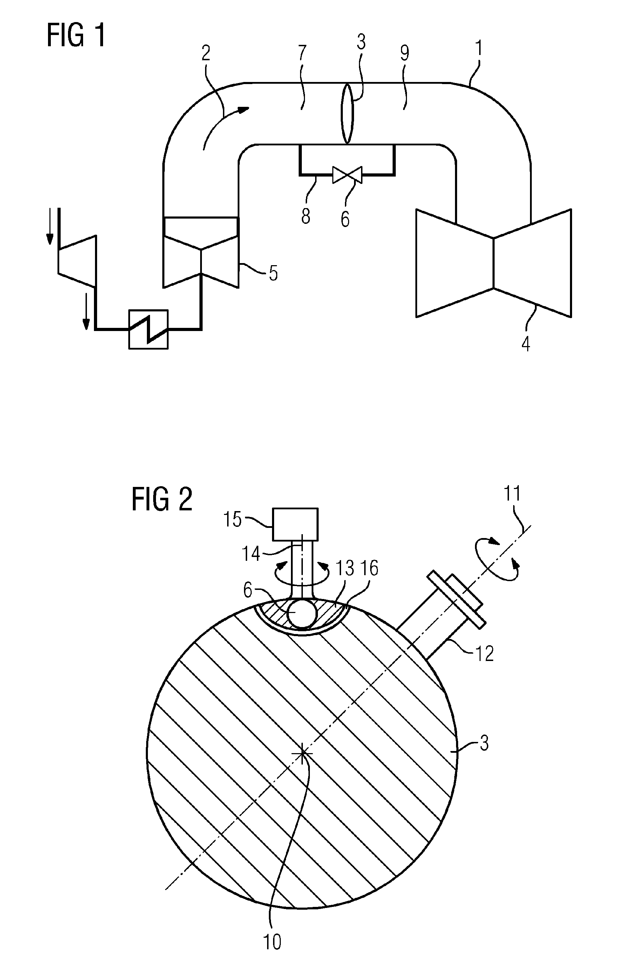

Die Figur 1 zeigt eine Überströmleitung, die auch als Strömungsmediumleitung 1 oder Dampfleitung bezeichnet werden kann. Durch diese Überströmleitung 1 strömt Dampf in einer Strömungsrichtung 2 über eine schwenkbar ausgebildete Stauklappe 3 zu einer Niederdruckteilturbine 4, die lediglich schematisch dargestellt ist. Die Überströmleitung ist strömungstechnisch mit einer Mitteldruckteilturbine 5 verbunden. Die Überströmleitung weist ein Sicherheitsventil 6 auf, das zum Durchströmen von Strömungsmedium durch die Überströmleitung bei geschlossener Klappe 3 ausgebildet ist. Das bedeutet, dass die in Figur 1 dargestellte Stauklappe geschlossen ist und in einem Störfall in einem Raum 7 vor der Klappe 3 ein zu hoher Druck auftreten könnte. Dieser überhöhte Druck wird über eine Bypassleitung 8 umgeleitet zu einem Raum 9 hinter der Stauklappe. Die Bypassleitung 8 stellt eine strömungstechnische Verbindung zwischen dem ersten Raum 7 vor der Klappe 3 und einem zweiten Raum 9 hinter der Klappe 3 her, wobei das Sicherheitsventil 6 in der Bypassleitung 8 angeordnet ist.

Die Klappe 3 ist im Querschnitt gesehen konvex ausgebildet. Die Überströmleitung ist im Wesentlichen als Rohrleitung ausgeführt. Das bedeutet, dass die Überströmleitung einen kreisförmigen Querschnitt aufweist. Der in Figur 1 dargestellte Zustand stellt einen Zustand im geschlossenen Fall dar. Das bedeutet, dass die Klappe 3 dampfdicht abgeschlossen ist und kein Dampf durch die Überströmleitung vom ersten Raum 7 zum zweiten Raum 9 führen kann. Bei Volllast, das bedeutet, dass ein maximal möglicher Dampfdurchfluss durch die Turbine vorliegt, kann es vorkommen, dass die Klappe 3 fehlerhaft geschlossen ist und der Dampf dann über das Sicherheitsventil 6 vom ersten Raum 7 zum zweiten Raum 9 weitergeführt wird.

Die Figur 2 zeigt eine Querschnittsansicht der Klappe 3. Die Klappe 3 ist im Wesentlichen kreisförmig um einen Symmetriepunkt 10 ausgebildet und um eine Drehachse 11 schwenkbar. Die Drehachse 11 ist in der Figur 1 ca. 45° gegenüber einer nicht dargestellten horizontalen Linie geneigt. Die Klappe 3 wird über einen Antrieb 12 bewegt. Der in Figur 2 dargestellte Zustand stellt den Zustand im geschlossenen Fall dar. In der Klappe 3 ist eine Zusatzklappe 13 angeordnet, die um eine weitere Drehachse 14 schwenkbar ausgebildet ist. Die Zusatzklappe 13 kann alternativ hierzu fest angeordnet sein. Die Zusatzklappe 13 wird über einen weiteren Antrieb 15 geschwenkt. Der Zustand in Figur 2 zeigt den geschlossenen Fall. Die weitere Drehachse 14 ist circa 30° gegenüber der Drehachse 11 geneigt. In alternativen Ausführungsformen kann die Drehachse 11 identisch sein mit der weiteren Drehachse 14. Das würde bedeuten, dass lediglich ein Antrieb erforderlich sein könnte für die Klappe 3 als auch für die Zusatzklappe 13. In weiteren alternativen Ausführungsformen kann die Zusatzklappe 13 starr ausgeführt werden. Die Zusatzklappe 13 kann relativ zur Stauklappe 3 gedreht werden. Es sind verschiedene Drehachsen für die Stauklappe 3 als auch für die Zusatzklappe 13 möglich.

In der Zusatzklappe 13 ist das Sicherheitsventil 6 angeordnet. Die Zusatzklappe 13 ist halbkreisförmig ausgebildet, wobei ein Restspalt 16 zwischen der Zusatzklappe 13 und der Stauklappe 3 ausgebildet ist. In alternativen Ausführungsformen kann die Stauklappe 3 gegenüber der Zusatzklappe 13 dampfdicht ausgebildet sein. Das bedeutet, dass ein Restspalt 16 zwischen der Zusatzklappe 13 und der Stauklappe 3 nicht vorhanden ist. Die Fläche der Zusatzklappe 13 entspricht zwischen 2% und 10%, 3% und 9% oder 4% und 8% der Fläche der Klappe 3.

Die Fläche des Restspaltes entspricht zwischen 1% und 2% der Gesamtfläche der Klappe 3.

Das Sicherheitsventil 6 ist derart ausgebildet, dass es öffnet, wenn ein bestimmter Druck im Raum 7 herrscht.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Strömungsmediumleitung (1),
insbesondere Dampfleitung, insbesondere Überströmleitung, mit einer Klappe (3), die drehbar innerhalb der Strömungsmediumleitung (1) angeordnet ist,
**gekennzeichnet durch**
ein Sicherheitsventil (6), das zum Durchströmen von Strömungsmedium **durch** die Strömungsmediumleitung (1) bei geschlossener Klappe (3) ausgebildet ist.

2. Strömungsmediumleitung (1) nach Anspruch 1,
mit einer Bypassleitung (8), die eine strömungstechnische Verbindung herstellt zwischen einem ersten Raum (7) vor der Klappe (3) und einem zweiten Raum (9) hinter der Klappe (3),
wobei das Sicherheitsventil (6) in der Bypassleitung (8) angeordnet ist.

3. Strömungsmediumleitung (1) nach Anspruch 1,
wobei das Sicherheitsventil (6) in der Klappe (3) angeordnet ist.

4. Strömungsmediumleitung (1) nach Anspruch 3,
wobei die Klappe (3) eine weitere Zusatzklappe (13) aufweist, die schwenkbar relativ zur Klappe (3) ausgebildet ist,
so dass bei geschlossener Klappe (3) eine Öffnung über die Zusatzklappe (13) erfolgen kann.

5. Strömungsmediumleitung (1) nach einem der vorhergehenden Ansprüche,
wobei in der Zusatzklappe (13) das Sicherheitsventil (6) angeordnet ist.

6. Strömungsmediumleitung (1) nach einem der vorhergehenden Ansprüche,
wobei die Klappe (3) kreisförmig ausgebildet ist und eine Drehachse (11), die mittig durch die Klappe (3) verläuft, drehbar ausgebildet ist.

7. Strömungsmediumleitung (1) nach einem der vorhergehenden Ansprüche,
wobei die Klappe (3) eine halbkreisförmige Aussparung aufweist und in dieser Aussparung die Zusatzklappe (13) angeordnet ist und die Zusatzklappe um dieselbe Drehachse (11) schwenkbar angeordnet ist.

8. Strömungsmediumleitung (1) nach einem der vorhergehenden Ansprüche,
wobei die Zusatzklappe (13) eine Fläche aufweist, die zwischen 2% und 10% oder 3% und 9% oder 4% und 8% der Fläche der Klappe (3) ausmacht.

9. Strömungsmediumleitung (1) nach einem der vorhergehenden Ansprüche,
wobei die Fläche des Restspaltes (16) zwischen 1% und 2% der Gesamtfläche der Strömungsmediumleitung (1) entspricht.
